# EUROPEAN PATENT SPECIFICATION

(11) **EP 0 989 309 B1**
(45) Date of publication and mention of the grant of the patent: **23.11.2005**
(21) Application number: 99307429.3
(22) Date of filing: 20.09.1999
(51) Int. Cl.: F16B 13/04, F16B 13/12

(54) **Fixing device**
Befestigungsvorrichtung
Dispositif de fixation

(30) Priority: 19.09.1998 GB 9820371
(43) Date of publication of application: 29.03.2000
(73) Proprietor: Artex Rawlplug Limited, Loughborough, Leicestershire LE12 6HX (GB)
(72) Inventor: Wallace, Thomas Campbell, Glasgow G44 3PX (GB)
(74) Representative: Pattullo, Norman

(56) References cited:
- GB-A- 1 537 265
- US-A- 3 431 813
- US-A- 4 218 954

## Description

The present invention relates to a fixing device, and in particular to a fixing device for securely mechanically fixing an article to a panel.

It has previously been proposed to provide a fixing device in the form of a plug for insertion through a thin panel, for example a hollow door, to provide secure engagement for a fitting such as a coat hook on the panel. A fixing device of that nature has a pair of generally parallel legs a first end portion of which together form a flange for engaging an outer face of the panel around a hole in the panel. The legs extend through the hole and terminate in a second end portion in the form of a boss having a through bore. The boss receives the leading end of a screw that passes through the fixing device, and on continued rotation of the screw the boss is drawn towards the first end of the device by virtue of the legs deforming outwardly. This deformation causes the legs to engage the inner face of the panel around the hole, thus anchoring the device in the panel against withdrawal.

This prior proposal has the legs spaced apart by a distance greater than the diameter of the screw, so that the material of the legs does not become engaged with the screw beyond the panel, which could interfere with the ability of the legs freely to deform outwardly. Further, the device requires that the legs deform before there is a breakdown of the driving engagement between the screw and the boss.

In order to ensure the outward deformation, the legs in this prior proposed fixing device are shaped so that in use, they are bowed outwardly after insertion through the panel. A further prior art fixing device is disclosed in US-A-4218954. A screw tastening device is disclosed which comprises a hollow tubular element capable of being clipped in a round hole of a support and a wedge forming complementary element. In use, the wedge element penetrates the hollow tubular element. A screw is then inserted into the device which taps a lower portion of the hollow tubular element causing simultaneously the descent of the wedge element and reascent of the lower portion of the tubular element.

According to a first aspect of the present invention, there is provided a fixing device having the features of claim 1.

The breakdown of the driving engagement may be provided in several different ways, or by a combination of them. For example, the material from which the second end portion is made may be weak enough that it loses its integrity under the effect of the tightening screw, or the second end portion may have a hole therein or therethrough which is of a diameter sufficiently large in relation to that of the leading end of the screw that the screw thread cannot engage deeply into the wall of the hole. Alternatively the screw may have a shallow thread for the same reason.

Preferably, the body portion is in the form of first and second legs conjoined at one end by the second end portion. Preferably the fixing device is generally U-shaped, the legs being conjoined at said one end only.

Preferably, the legs are arcuate in cross-section and can be moved together to form an annulus at the first end portion, the annulus providing an entrance to said passageway through the body portion.

Preferably, the device is used with a screw of greater cross section than the passageway.

Preferably, the body portion has a generally cylindrical outer wall.

Preferably, the first end portion is provided with means for preventing rotation, for example fins. Further, the first end portion preferably forms a flange of greater lateral extent than the remainder of the body portion.

Embodiments of the present invention will now be described, by way of example only, with reference to the accompanying drawings, in which:
Fig. 1a is a side elevation of a first embodiment of the present invention, having a generally parallel passageway;
Fig. 1b is a side elevation of a second embodiment of the present invention having a tapering passageway; and
Fig. 2a to 2e are side elevations illustrating the steps involved in using the fixing device of the embodiment of Fig. 1a of the present invention.

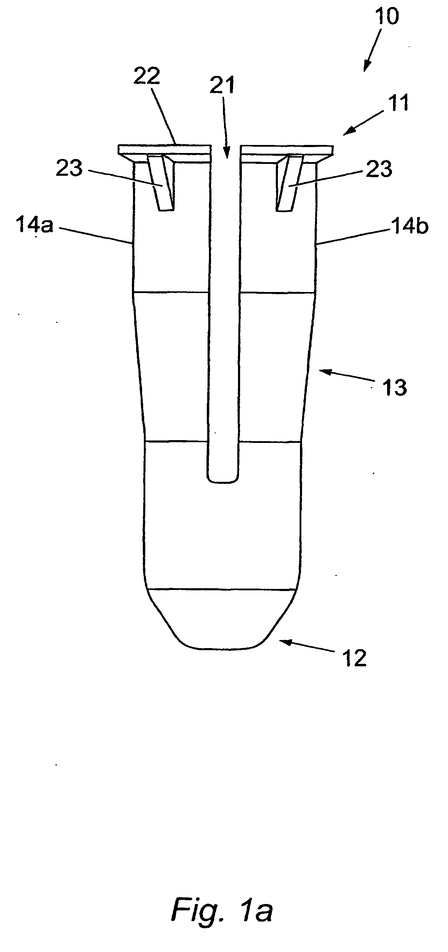

Referring to Fig. 1a, there is illustrated a first embodiment of a fixing device 10 in accordance with the present invention. The fixing device 10 is made of plastics material and is generally U-shaped in cross section. The fixing device 10 comprises a first end portion 11, a second end portion 12 and a body portion 13 between the first end portion 11 and the second end portion 12.

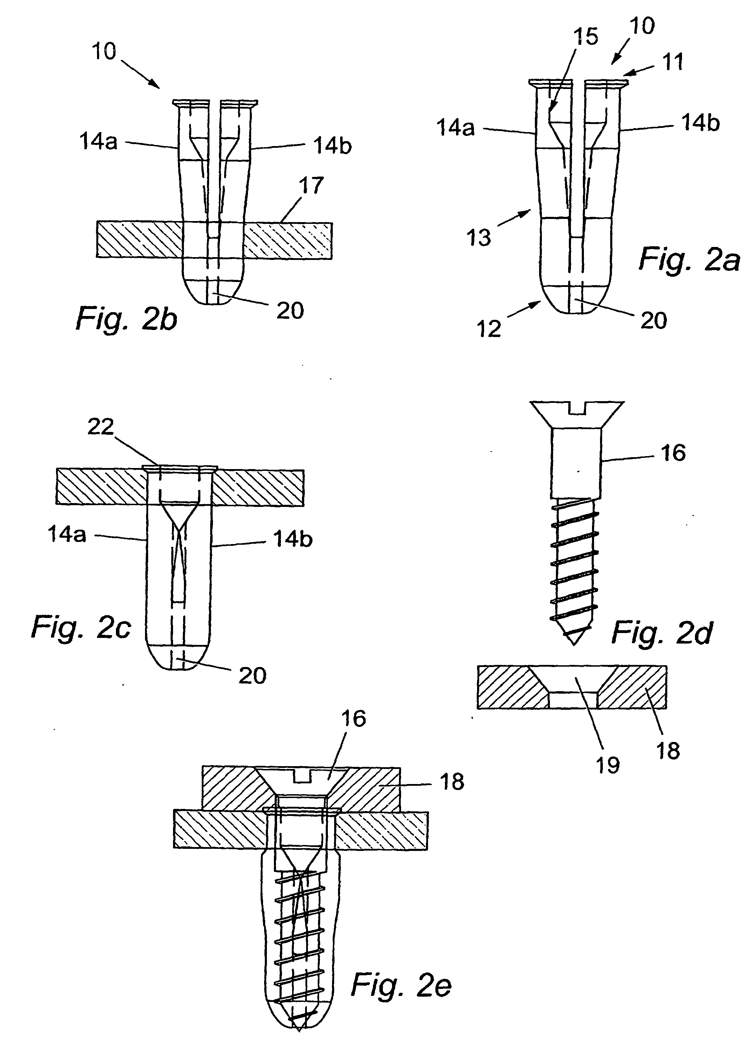

The body portion 13 comprises first and second legs 14a and 14b which are conjoined at the second end portion 12, which is generally in the form of a boss having a through bore 20 (Fig 2a). The broadest part of the second end portion 12 has approximately the same - diameter as the diameter of a hole into which it will be inserted; for example, the diameter of the hole is 5mm and the diameter of the second end portion 12 is 5mm. However, the body portion 13 tapers outwardly towards the first end 11; for example, if portion 13a adjacent the second end portion 12 has a diameter of 5mm then the diameter of the body portion at 13b adjacent the first end portion 11 before insertion into the hole is 5.2mm. This provides secure engagement of the portion 13b with the sides of the hole after insertion.

A parallel-sided passageway 21 extends between and is defined by the first and second legs 14a and 14b.

The method of using the fixing device of Fig 1a is best shown in Figs. 2a to 2e. The device 10 is inserted into a pre-drilled hole in a thin panel 17 (as seen in Fig. 2b) such as on a hollow door. The fixing device 10 is then pushed through the pre-drilled hole, compressing the legs 14a and 14b together. Once inserted, the fixing device 10 is of a generally cylindrical form (as is best seen in Fig. 2c) and is prevented from overinsertion by a flange 22 extending outwardly from the first end portion 11.

A screw 16 is then inserted through a fixing hole 19 in a fitting 18 to be secured to the panel 17 (for example a hook). The screw 16 is then inserted into the first end portion 11 of the fixing device 10 and screwed in.

As the screw 16 passes through the first end portion 11 and into the body portion 13, the screw 16 pushes the first end portion 11 outwardly against the side wall of the hole, thus providing a tight fit. As the screw 16 continues into the body portion 13, the mass of the screw 16 causes the body portion 13 of the fixing device 10 to deform outwardly (as is best seen in Fig. 2e). This slight deformation acts as a resistive element if a force is applied to the article 18 tending to pull the fixing device 10 from the panel 17.

As the screw 16 continues to be tightened, it engages the bore through the second end portion 12. This gives the user a "solid" feel that the screw is fully tightened. If however, the screw 16 is overtightened, the driving engagement between the screw and the second end portion 12 breaks down before there is significant deformation or collapse of the legs 14a and 14b by the compressive force applied by the tightening of the screw 16.

Fins 23 can be provided on the first end portion 11 in order more securely to grip the fixing device 10 in the hole so that when the screw 16 is being tightened the fixing device 10 does not turn under the torsional force being applied to the screw 16. Such fins are of particular use when the fixing device 10 is used for holes in perspex or other low-friction materials.

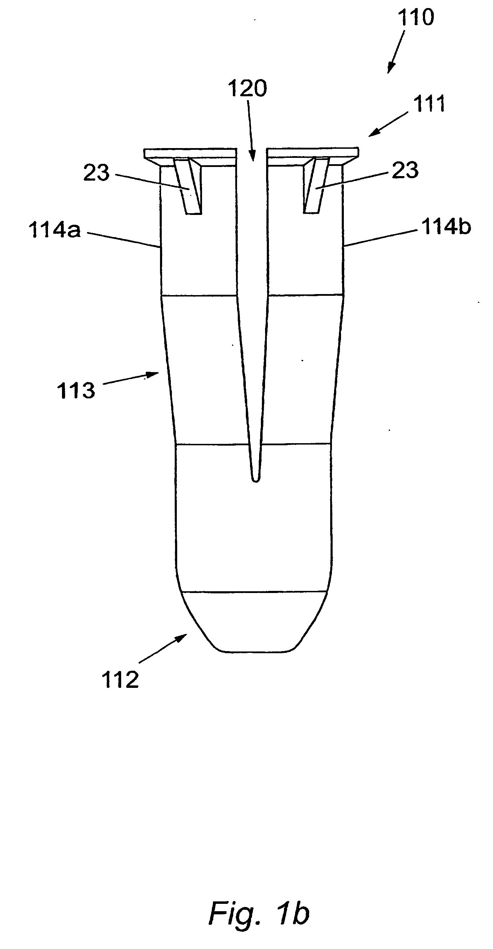

Referring to Fig. 1b, there is illustrated a second embodiment of the present invention, being substantially similar to the first embodiment but having a tapering passageway 120 between the first and second legs 114a and 114b.

## Claims

1. A fixing device (10) having first (11) and second (12) end portions with a body portion (13) between them, said first end portion (11) and said body portion (13) having a passageway (21) therethrough, said second end portion (12) being capable of receiving and engaging the leading end of a screw (16), wherein when the screw (16) engages with the body portion (13), the body portion (13) deforms laterally through wedge action of the screw (16) and when the screw (16) engages the second end portion (12) and is tightened therein, the driving engagement between the screw (16) and the second end portion (12) breaks down such that there is no subsequent lateral deformation of the body portion (13) by any compressive force applied by the tightening of the screw (16).

2. A fixing device (10) according to claim 1, wherein the body portion (13) comprises first (14a) and second (14b) legs conjoined at one end by the second end portion (12).

3. A fixing device (10) according to claim 1 or 2, wherein the body portion (13) has a generally cylindrical outer wall.

4. A fixing device (10) according to any one of the preceding claims, wherein the second end portion (12) has a through bore for receiving a leading end of a screw (16).

5. A fixing device (10) according to any one of the preceding claims, wherein the first end portion (11) provides a flange (22) of greater lateral extent than the rest of the body portion (13).

6. The combination of a fixing device (10) for securing a fitting (18) to a substrate (17) and a screw (16), the fixing device (10) having first (11) and second (12) end portions with a body portion (13) between them, said first end portion (11) and said body portion (13) having a passageway (21) therethrough, said second end portion (12) being capable of receiving and engaging the leading end of the screw (16), wherein when the screw (16) engages with the body portion (13), the body portion (13) deforms laterally through wedge action of the screw (16) and when the screw (16) engages the second end portion (12) and is tightened therein, the driving engagement between the screw (16) and the second end portion (12) breaks down such that there is no subsequent lateral deformation of the body portion (13) by any compressive force applied by the tightening of the screw (16).

7. The combination according to claim 6, wherein the body portion (13) comprises first (14a) and second (14b) legs conjoined at one end by the second end portion (12).

## Patentansprüche

1. Eine Fixiervorrichtung (10), die einen ersten (11) und einen zweiten (12) Endabschnitt mit einem Körperabschnitt (13) dazwischen aufweist, wobei der erste Endabschnitt (11) und der Körperabschnitt (13) einen Verbindungsweg (21) dadurch aufweisen, wobei der zweite Endabschnitt (12) in der Lage ist, das vordere Ende einer Schraube (16) aufzunehmen und in dieses einzugreifen, wobei der Körperabschnitt (13) sich durch Keilwirkung der Schraube (16) seitlich verformt, wenn die Schraube (16) in den Körperabschnitt (13) eingreift, und der führende Eingriff zwischen der Schraube (16) und dem zweiten Endabschnitt (12) aufgehoben wird, wenn die Schraube (16) in den zweiten Endabschnitt (12) eingreift und darin angezogen wird, so dass keine anschließende seitliche Verformung des Körperabschnittes (13) durch jegliche Druckkraft, die durch das Anziehen der Schraube (16) angewendet wird, auftritt.

2. Fixiervorrichtung (10) gemäß Anspruch 1, wobei der Körperabschnitt (13) einen ersten (14a) und einen zweiten (14b) Schenkel beinhaltet, die an einem Ende durch den zweiten Endabschnitt (12) miteinander verbunden sind.

3. Fixiervorrichtung (10) gemäß Anspruch 1 oder 2, wobei der Körperabschnitt (13) eine im Allgemeinen zylindrische Außenwand aufweist.

4. Fixiervorrichtung (10) gemäß einem der vorhergehenden Ansprüche, wobei der zweite Endabschnitt (12) eine Durchgangsbohrung zum Aufnehmen eines vorderen Endes einer Schraube (16) aufweist.

5. Fixiervorrichtung (10) gemäß einem der vorhergehenden Ansprüche, wobei der erste Endabschnitt (11) einen Flansch (22) mit größerem seitlichen Ausmaß als der Rest des Körperabschnitts (13) aufweist.

6. Die Kombination einer Fixiervorrichtung (10) zum Sichern eines Anschlussstücks (18) an einem Substrat (17) und einer Schraube (16), wobei die Fixiervorrichtung (10) einen ersten (11) und einen zweiten (12) Endabschnitt mit einem Körperabschnitt (13) dazwischen aufweist, wobei der erste Endabschnitt (11) und der Körperabschnitt (13) einen Verbindungsweg (21) dadurch aufweisen, wobei der zweite Endabschnitt (12) in der Lage ist, das vordere Ende einer Schraube (16) aufzunehmen und in dieses einzugreifen, wobei der Körperabschnitt (13) sich durch Keilwirkung der Schraube (16) seitlich verformt, wenn die Schraube (16) in den Körperabschnitt (13) eingreift, und der führende Eingriff zwischen der Schraube (16) und dem zweiten Endabschnitt (12) aufgehoben wird, wenn die Schraube (16) in den zweiten Endabschnitt (12) eingreift und darin angezogen wird, so dass keine anschließende seitliche Verformung des Körperabschnittes (13) durch jegliche Druckkraft, die durch das Anziehen der Schraube (16) angewendet wird, auftritt.

7. Kombination gemäß Anspruch 6, wobei der Körperabschnitt (13) einen ersten (14a) und einen zweiten (14b) Schenkel beinhaltet, die an einem Ende durch den zweiten Endabschnitt (12) miteinander verbunden sind.

## Revendications

1. Un dispositif de fixation (10) ayant une première portion d'extrémité (11) et une deuxième portion d'extrémité (12) avec une portion formant corps (13) entre elles, ladite première portion d'extrémité (11) et ladite portion formant corps (13) ayant un passage (21) à travers celles-ci, ladite deuxième portion d'extrémité (12) étant capable de recevoir et de se mettre en prise avec l'extrémité d'attaque d'une vis (16), dans lequel lorsque la vis (16) se met en prise avec la portion formant corps (13), la portion formant corps (13) se déforme latéralement par l'action de coinçage de la vis (16) et lorsque la vis (16) se met en prise avec la deuxième portion d'extrémité (12) et est serrée dans celle-ci, la mise en prise d'entraînement entre la vis (16) et la deuxième portion d'extrémité (12) s'annule de telle sorte qu'il n'y ait aucune déformation latérale subséquente de la portion formant corps (13) par n'importe quelle force de compression appliquée par le serrage de la vis (16).

2. Un dispositif de fixation (10) selon la revendication 1, dans lequel la portion formant corps (13) comporte une première patte (14a) et une deuxième patte (14b) liées à une extrémité par la deuxième portion d'extrémité (12).

3. Un dispositif de fixation (10) selon la revendication 1 ou la revendication 2, dans lequel la portion formant corps (13) a une paroi externe généralement cylindrique.

4. Un dispositif de fixation (10) selon n'importe laquelle des revendications précédentes, dans lequel la deuxième portion d'extrémité (12) a un alésage débouchant destiné à recevoir une extrémité d'attaque d'une vis (16).

5. Un dispositif de fixation (10) selon n'importe laquelle des revendications précédentes, dans lequel la première portion d'extrémité (11) fournit un flasque (22) d'étendue latérale plus importante que le reste de la portion formant corps (13).

6. La combinaison d'un dispositif de fixation (10) destiné à assujettir un raccord (18) à un substrat (17) et d'une vis (16), le dispositif de fixation (10) ayant une première portion d'extrémité (11) et une deuxième portion d'extrémité (12) avec une portion formant corps (13) entre elles, ladite première portion d'extrémité (11) et ladite portion formant corps (13) ayant un passage (21) à travers celles-ci, ladite deuxième portion d'extrémité (12) étant capable de recevoir et de se mettre en prise avec l'extrémité d'attaque de la vis (16), dans laquelle lorsque la vis (16) se met en prise avec la portion formant corps (13), la portion formant corps (13) se déforme latéralement par l'action de coinçage de la vis (16) et lorsque la vis (16) se met en prise avec la deuxième portion d'extrémité (12) et est serrée dans celle-ci, la mise en prise d'entraînement entre la vis (16) et la deuxième portion d'extrémité (12) s'annule de telle sorte qu'il n'y ait aucune déformation latérale subséquente de la portion formant corps (13) par n'importe quelle force de compression appliquée par le serrage de la vis (16).

7. La combinaison selon la revendication 6, dans laquelle la portion formant corps (13) comporte une première patte (14a) et une deuxième patte (14b) liées à une extrémité par la deuxième portion d'extrémité (12).
